# EUROPEAN PATENT SPECIFICATION

(11) **EP 3 010 226 B1**
(45) Date of publication and mention of the grant of the patent: **10.10.2018**
(21) Application number: 15183055.1
(22) Date of filing: 28.08.2015
(51) Int. Cl.: H04N 5/262, H04N 5/232

(54) **METHOD AND APPARATUS FOR OBTAINING PHOTOGRAPH**
VERFAHREN UND VORRICHTUNG ZUM ERHALT EINER FOTOGRAFIE
PROCÉDÉ ET APPAREIL D'OBTENTION DE PHOTOGRAPHIE

(30) Priority: 29.08.2014 CN 201410438203
(43) Date of publication of application: 20.04.2016
(73) Proprietor: Xiaomi Inc., Beijing 100085 (CN)
(72) Inventor: TANG, Mingyong, 100085 Beijing (CN); LIU, Huayijun, 100085 Beijing (CN); CHEN, Tao, 100085 Beijing (CN)
(74) Representative: Sackin, Robert

(56) References cited:
- WO-A1-2007/148169
- JP-A- 2011 135 409
- US-A1- 2012 002 112

## Description

### TECHNICAL FIELD

The present disclosure generally relates to a field of image processing, and more particularly, to a method for obtaining a photograph and an apparatus for obtaining a photograph.

### BACKGROUND

A trajectory photograph is a photograph which can show a trajectory of a moving object. The trajectory photograph can give a user a novel visual effect.

Generally, the user adopts some professional photography skills to capture the trajectory of the moving object in the related art. During a photographing process, mostly, a tripod is needed to fix a camera, and a high-quality trajectory photograph can be got by coordinating a corresponding shutter speed with a moving speed of the moving object. However, since an operation is complicated and specialized, an ordinary user can not get the high-quality trajectory photograph.

Japanese patent application with publication No. JP2011135409 discloses an arrangement to obtain a composite image by continuous shooting of a moving object.

International patent application with publication No. WO2007/148169 discloses a camera that has an image sensor to form one or more exposures and a motion sensor to sense the movement of the camera during an exposure period. When the movement is within a certain range, the exposures are used to provide one or more frames so that an image can be constructed based on the frames.

US patent application with publication No. US2012/0002112 discloses an apparatus that generates simulated strobe effects in the form of video or still image output in response to receipt of a video stream, and without the need of additional strobe hardware.

### SUMMARY

The embodiments of the present disclosure provide a method for obtaining a photograph and an apparatus for obtaining a photograph to overcome the problems in the related art that the ordinary user cannot get a high-quality trajectory photograph due to the fact that the operation is complicated and specialized. The technical solutions are as follows.
Aspects of the present invention are defined by the independent claims below. Optional features are defined by the dependent claims.

The technical solutions provided by embodiments of the present disclosure have following advantageous effects.

By obtaining the n frames of images, in which n ≥ 2; identifying the first background regions and the moving objects in the n frames of images; and synthesizing the target photograph according to the first background regions and the moving objects, in which the target photograph includes the at least two images in different motion states of the same moving object locating in the same first background region, the problems in the related art that the ordinary user cannot get the high-quality trajectory photograph due to the fact that the operation is complicated and specialized can be solved, and the effect that the high-quality trajectory photograph can be got by the user without the complex operation can be realized.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for obtaining a photograph according to an exemplary embodiment of the present disclosure;
Fig. 2 is a flow chart of a method for obtaining a photograph according to another exemplary embodiment of the present disclosure;
Fig. 3 is a schematic diagram of an implementation of a method for obtaining a photograph according to another exemplary embodiment of the present disclosure;
Fig. 4 is a schematic diagram of an implementation of a method for obtaining a photograph according to another exemplary embodiment of the present disclosure;
Fig. 5 is a schematic diagram of an implementation of a method for obtaining a photograph according to another exemplary embodiment of the present disclosure;
Fig. 6 is a schematic diagram of an implementation of a method for obtaining a photograph according to another exemplary embodiment of the present disclosure;
Fig. 7 is a schematic diagram of an implementation of a method for obtaining a photograph according to another exemplary embodiment of the present disclosure;
Fig. 8 is a flow chart of a method for obtaining a photograph according to another exemplary embodiment of the present disclosure;
Fig. 9 is a schematic diagram of an implementation of a method for obtaining a photograph according to another exemplary embodiment of the present disclosure;
Fig. 10 is a block diagram of an apparatus for obtaining a photograph according to an exemplary embodiment of the present disclosure;
Fig. 11 is a block diagram of an apparatus for obtaining a photograph according to another exemplary embodiment of the present disclosure;
Fig. 12 is a block diagram of an electronic device according to an exemplary embodiment of the present disclosure.

According to the above-described accompanying drawings, embodiments of the present disclosure are provided, and will be described in more detail hereafter. These accompanying drawings and corresponding description are not intended to limit the scope of the disclosure by any means, and the concept of the present disclosure is explained to those skilled in the art with reference to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The method for obtaining a photograph according to embodiments of the present disclosure can be realized by an electronic device which has an image processing capability and an image photographing capability. The electronic device can be a smart phone, a tablet, an E-book reader, a laptop (camera), etc.

In order to simplify the description, in the following, take the method for obtaining a photograph being executed by the electronic device or apparatus which has the image processing capability and the image photographing capability as an example. The electronic device is not limited herein.

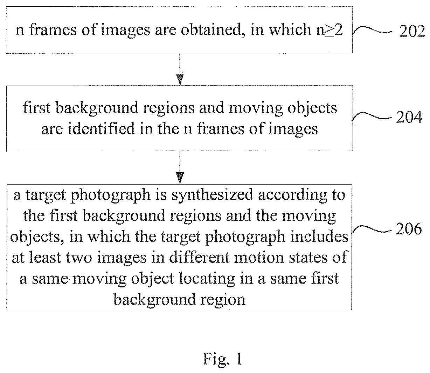

Fig. 1 is the flow chart of a method for obtaining a photograph according to an exemplary embodiment of the present disclosure representing background that is useful for understanding the invention. In this embodiment, take the method for obtaining a photograph being used in the electronic device which has the image processing capability and the image photographing capability as an example to illustrate this. The method for obtaining a photograph can include the following steps.

In step 102, n frames of images are obtained, in which n≥2.

In step 104, first background regions and moving objects are identified in the n frames of images.

In step 106, a target photograph is synthesized according to the first background regions and the moving objects, in which the target photograph includes at least two images in different motion states of a same moving object locating in a same first background region.

In summary, with the method for obtaining a photograph according to an exemplary embodiment of the present disclosure, by obtaining the n frames of images, in which n≥2; identifying the first background regions and the moving objects in the n frames of images; and synthesizing the target photograph according to the first background regions and the moving objects, in which the target photograph includes the at least two images in different motion states of the same moving object locating in the same first background region, the problems that the ordinary user cannot get the high-quality trajectory photograph due to the fact that the operation is complicated and specialized can be solved, and the effect that the high-quality trajectory photograph can be got by the user without the complex operation can be realized.

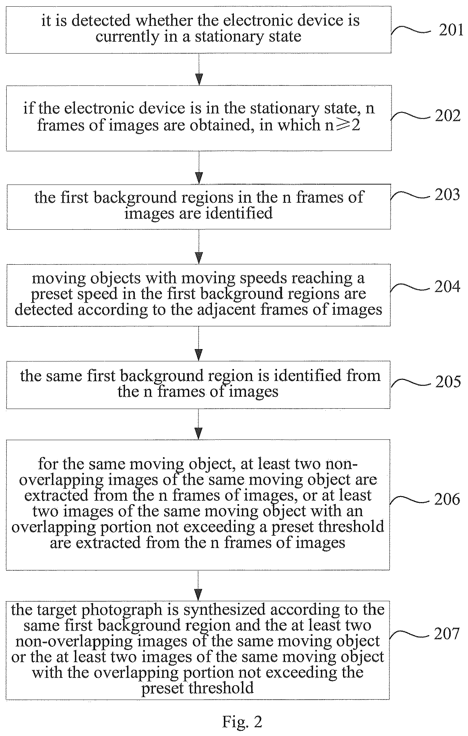

Fig. 2 is the flow chart of a method for obtaining a photograph according to an exemplary embodiment of the present disclosure. In this embodiment, take the method for obtaining a photograph being used in the electronic device which has the image processing capability and the image photographing capability as an example to illustrate this. The method for obtaining a photograph can include the following steps.

In step 201, it is detected whether the electronic device is currently in a stationary state.

If a shooting function of the electronic device is turned on, the electronic device can detect whether itself is currently in the stationary state, step 201 can be realized by any one of the following two ways or a combination thereof.

The first way, the electronic device obtains sensor data from a sensor disposed on the electronic device, in which the sensor includes one or more of a gravity acceleration sensor, a gyroscope and an electronic compass sensor; and then the electronic device detects whether the sensor data change, in which it is determined that the electronic device is currently in the stationary state if the sensor data do not change.

The second way, the electronic device detects whether a second background region obtained by an image sensor of the electronic device changes, in which it is determined that the electronic device is currently in the stationary state if the second background region does not change.

When the two ways are implemented in conjunction with each other, the first way can be executed firstly, and then the second way can be executed if the sensor data do not change.

If the detecting result is that the electronic device is currently in the stationary state, step 202 is followed, if the detecting result is that the electronic device is in a non-stationary state, step 201 is repeated.

In step 202, if the electronic device is in the stationary state, n frames of images are obtained, in which n≥2.

If the electronic device is currently in the stationary state, the n frames of images are obtained. Step 202 can include the following sub-steps:
1. the electronic device shoots a video firstly;
2. the electronic device extracts the n frames of images from the video.

The electronic device can extract each frame of image in the video to obtain the n frames of images. Generally, the n frames of images are sequenced according to the shooting time from early to late. The n frames of images have the same or similar first background region. The electronic device can obtain the n frames of images according to a way of extracting one frame of image at intervals of some predetermined frames of images.

For example, assuming that the video includes 24 frames of images, the electronic device can extract each frame of image in the video, and totally 24 frames of images can be obtained; the electronic device can extract one frame of image at intervals of 4 frames of images, and totally 6 frames of images can be obtained.

As another possible implementation, the electronic device can also obtain the n frames of images by shooting in a fast continuous shooting mode, and the fast continuous shooting mode is a mode for shooting at every predetermined interval.

In step 203, the first background regions in the n frames of images are identified.

The electronic device needs to identify the first background regions in the n frames of images. Alternative, step 203 can include the following sub-steps:
1. the electronic device makes a difference operation on two adjacent frames of images to obtain a difference image;
   since grays and positions of pixels in the first background regions do not change usually, the difference image obtained by making the difference operation on the two adjacent frames of images by the electronic device is an image of the moving objects;
2. the electronic device makes a difference operation on each of the two adjacent frames of images and the difference image to obtain a background image corresponding to the two adjacent frames of images;
   since the difference image is obtained as the image of the moving objects, the difference algorithm is performed on each of the two adjacent frames of images and the difference image, and the electronic devise can get the background image corresponding to the two adjacent frames of images.

It is to be explained, the above way is shown as an example only, and how to identify the first background regions in the n frames of images by the electronic device is not limited in this embodiment.

In step 204, moving objects with moving speeds reaching a preset speed in the first background regions are detected according to the adjacent frames of images.

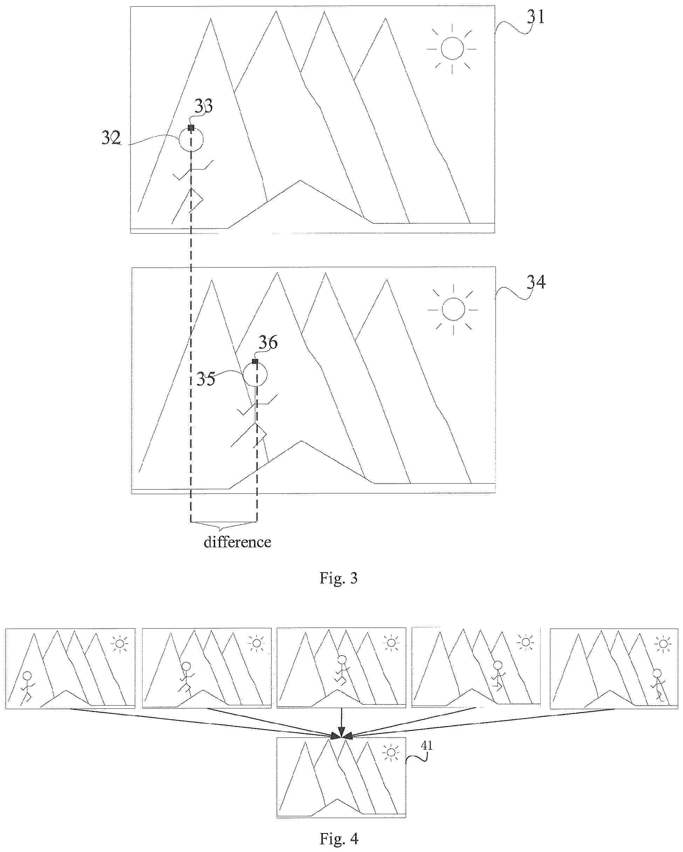

If the moving speeds of the moving objects are too low, too many images of the moving objects are in the synthesized trajectory photograph, such that the images of the moving objects can be covered, and the quality of the trajectory photograph can be affected. The images of the moving objects are regions corresponding to the moving objects in the n frames of images. As an alternative step, the electronic device may detect the moving speeds of the moving objects. Step 204 can include the following sub-steps:
1. the electronic device identifies the moving objects in the n frames of images;
   the electronic device firstly detects the moving objects in the n frames of images with a foreground detection technology and/or moving target detection technology;
2. for any one of the moving objects, the electronic device obtains a coordinate of one pixel in the image of the moving object in one frame of image;
   for example, as shown in Fig. 3, the coordinate of pixel 33 in the image 32 of the moving object in the frame 31 of image is obtained;
3. the electronic device obtains a coordinate of a corresponding pixel in the image of the moving object in an adjacent frame of image corresponding to the one frame of image;
   for example, as shown in Fig. 3, the coordinate of corresponding pixel 36 in the image 35 of the moving object in the adjacent frame 34 of image corresponding to the one frame 31 of image;
4. the electronic device calculates the moving speed of the moving object according to a difference of the two above coordinates;
   the electronic device calculates the difference of the coordinate of pixel 35 and the coordinate of pixel 36, and calculates the moving speed of the moving object according to the difference and a time difference between the adjacent frame of image and the one frame of image;
   the electronic device compares the calculated moving speed of the moving object and a preset speed, and if the moving speed of the moving object is greater than the preset speed, the moving object is a moving object with moving speed reaching the preset speed in the first background regions.

In step 205, the same first background region is identified from the n frames of images.

Since the n frames of images are shot in the stationary state, the n frames of images have the same first background region or similar first background region. After identifying the first background regions of the n frames of images, the electronic device also can identify the same first background region from the n frames of images as the background region of the trajectory photograph to be synthesized.

As shown in Fig. 4, there are 5 frames of images, since the grays and positions of pixels in the first background regions do not change, by doing the difference operation on the 5 frames of images, the electronic device can identify the same first background region 41 of the 5 frames of images.

In step 206, for the same moving object, at least two non-overlapping images of the same moving object are extracted from the n frames of images, or at least two images of the same moving object with an overlapping portion not exceeding a preset threshold are extracted from the n frames of images.

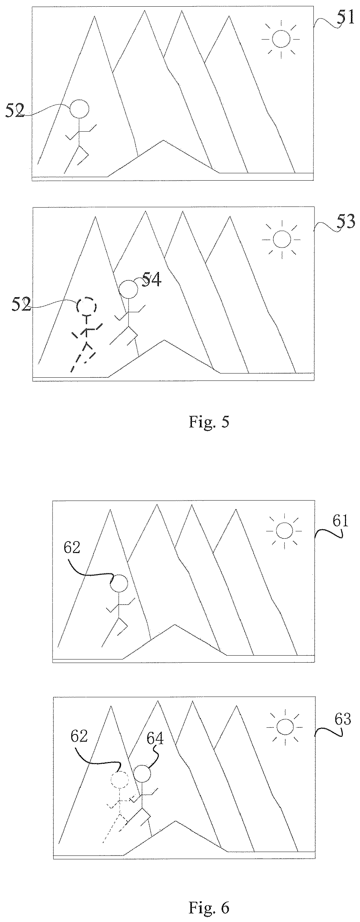

As a possible implementation of this step, the images of the same moving object may overlap in the n frames of images, thus affecting the quality of the synthesized trajectory photograph. Therefore, the electronic device needs to extract the non-overlapping images from the n frames of images, and step 206 can include the following steps
1. the electronic device obtains two coordinate sets corresponding to images of the same moving object in two frames of images respectively;
   as shown in Fig. 5, the electronic device obtains the coordinate set A of the image 52 of the same moving object in one frame 51 of image, and obtains the coordinate set B of the image 54 of the same moving object in one frame 53 of image;
2. the electronic device detects whether there are the same coordinates in the two coordinate sets; if yes, it is determined the two images of the same moving object are overlapping, one of the two images of the same moving object is abandoned; if no, the two images of the same moving object are both adopted;
   as shown in Fig. 5, the electronic device detects whether there are the same coordinates in the coordinate set A and the coordinate set B, for example, if there are no same coordinate in the coordinate set A and the coordinate set B, it is determined the image 54 of the same moving object and image 52 of the same moving object are non-overlapping.

As another possible implementation of this step, if an overlapping portion is small, the quality of the synthesized trajectory photograph is not affected, either. So, the electronic device can extract at least two images of the same moving object with an overlapping portion not exceeding a preset threshold from the n frames of images, in which sub-steps are as follows:
1. the electronic device obtains two coordinate sets corresponding to images of the same moving object in the two frames of images respectively.
   as shown in Fig. 6, the electronic device obtains the coordinate set A of the image 62 of the same moving object in one frame 61 of image, and obtains the coordinate set B of the image 64 of the same moving object in one frame 63 of image;
2. the electronic device calculates a ratio of same coordinates in the two coordinate sets;
   the number of the same coordinates in the two coordinate sets is obtained, and then the ratio of the same coordinates in the two coordinate sets is calculated;
3. if the ratio is less than or equal to a preset threshold, the electronic device extracts the images of the same moving object in the two frames of images;
   as shown in Fig. 6, the preset threshold is 10%, the ratio of the same coordinates in the coordinate set A of the image 62 of the same moving object and the coordinate set B of the image 64 of the same moving object is 5%, then electronic device extracts the image 62 of the same moving object and the image 64 of the same moving object. Of course, if the ratio is greater than the preset threshold, the electronic device extracts one of the two images of the same moving object and abandons another.

In step 207, the target photograph is synthesized according to the same first background region and the at least two non-overlapping images of the same moving object or the at least two images of the same moving object with the overlapping portion not exceeding the preset threshold.

The electronic device synthesizes the target photograph (i.e. the trajectory photograph) according to the same first background region identified from the n frames of images in step 208 and the at least two non-overlapping images of the same moving object or the at least two images of the same moving object with the overlapping portion not exceeding the preset threshold extracted in step 207.

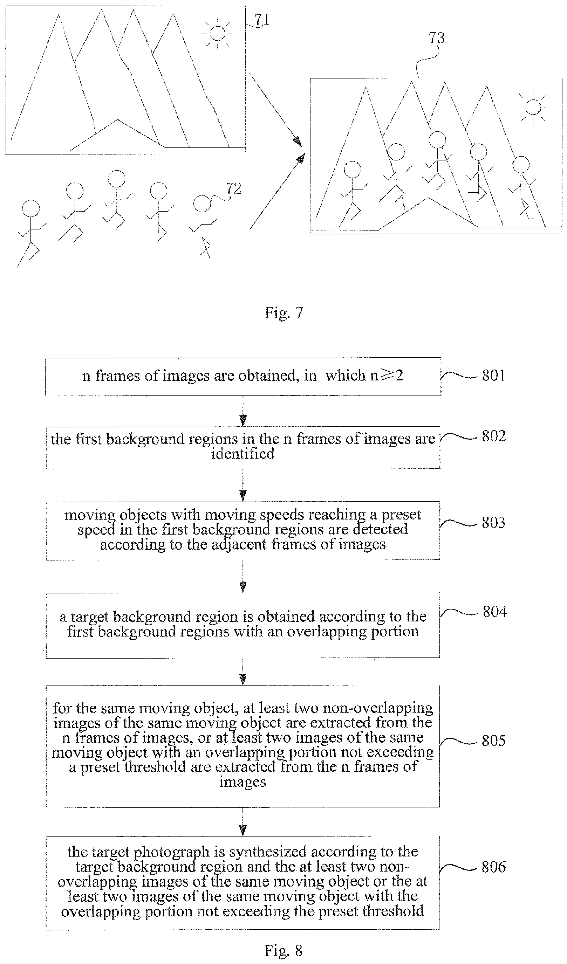

As shown in Fig. 7, the electronic device identifies the same first background region 81 from five frames of images, and extracts five images 72 of the same moving object, and synthesizes the target photograph 73 according to the same first background region 71 and the five images 72 of the same moving object.

Here the same moving object can be the moving object with the moving speed exceeding the preset threshold selected by the electronic device in step 204. In the process of synthesizing, the electronic device firstly takes the same first background region as the background region of the target photograph. Then for different images of the same moving object, according to original relative positions of each image of the same moving object relative to the same first background region in the n frames of images, the electronic device copies each image of the same moving object to a corresponding position in the same first background region so as to obtain the target photograph.

In summary, with the method for obtaining a photograph according to an exemplary embodiment of the present disclosure, by obtaining the n frames of images, in which n≥2; identifying the first background regions and the moving objects in the n frames of images; and synthesizing the target photograph according to the first background regions and the moving objects, in which the target photograph includes the at least two images in different motion states of the same moving object locating in the same first background region, the problems in the related art that the ordinary user cannot get the high-quality trajectory photograph due to the fact that the operation is complicated and specialized can be solved, and the effect that the high-quality trajectory photograph can be got by the user without the complex operation can be realized.

With the method for obtaining a photograph according to an exemplary embodiment of the present disclosure, by detecting whether the electronic device is currently in the stationary state, the n frames of images can be obtained if the electronic device is currently in the stationary state, thus ensuring the high-quality of the synthesized trajectory photograph.

With the method for obtaining a photograph according to an exemplary embodiment of the present disclosure, by extracting at least two non-overlapping images of the same moving object from the n frames of images, or extracting at least two images of the same moving object with an overlapping portion not exceeding a preset threshold from the n frames of images, the problem that images in the synthesized trajectory photograph overlap seriously can be solved, thus ensuring the high-quality of the synthesized trajectory photograph.

During the implementing process, if the first background regions of the n frames of images are not exactly the same, but each first background region has a large intersection with another first background region, the electronic device can also mosaic the first background regions with an intersection to obtain a target background region similar to a panoramic photograph, then can synthetic the trajectory photograph according to the target background region and the at least two non-overlapping images of the same moving object or the at least two images of the same moving object with the overlapping portion not exceeding the preset threshold.

Fig. 8 is the flow chart of a method for obtaining a photograph according to an exemplary embodiment of the present disclosure representing background that is useful for understanding the invention. In this embodiment, still take the method for obtaining a photograph being used in the electronic device which has the image processing capability and the image photographing capability as an example to illustrate this. The method for obtaining a photograph can include the following steps.

In step 801, n frames of images are obtained, in which n≥2.

If the electronic device is currently in a stationary state, the n frames of images are obtained. Step 202 can include the following sub-steps:
1. the electronic device shoots a video firstly;
2. the electronic device extracts the n frames of images from the video.

The electronic device can extract each frame of image in the video to obtain the n frames of images. Generally, the n frames of images are sequenced according to shooting time from early to late. The n frames of images have the same or similar first background region. The electronic device can obtain the n frames of images according to a way of extracting one frame of image at intervals of some predetermined frames of images.

For example, assuming that the video includes 24 frames of images, the electronic device can extract each frame of image in the video, and totally 24 frames of images can be obtained; the electronic device can extract one frame of image at intervals of 4 frames of images, and totally 6 frames of images can be obtained.

As another possible implementation, the electronic device can also obtain the n frames of images by shooting in a fast continuous shooting mode, and the fast continuous shooting mode is a mode for shooting at every predetermined interval.

In step 802, the first background regions in the n frames of images are identified.

The electronic device needs to identify the first background regions in the n frames of images. Alternative, step 802 can include the following sub-steps:
1. the electronic device makes a difference operation on two adjacent frames of images to obtain a difference image;
   since grays and positions of pixels in the first background regions do not change usually, the difference image obtained by making the difference operation on the two adjacent frames of images by the electronic device is an image of the moving objects;
2. the electronic device makes a difference operation on each of the two adjacent frames of images and the difference image to obtain a background image corresponding to the two adjacent frames of images;
   since the difference image is obtained as the image of the moving objects, the difference algorithm is performed on each of the two adjacent frames of images and the difference image, and the electronic devise can get the background image corresponding to the two adjacent frames of images.

It is to be explained, the above way is shown as an example only, and how to identify the first background regions in the n frames of images by the electronic device is not limited in this embodiment.

In step 803, moving objects with moving speeds reaching a preset speed in the first background regions are detected according to the adjacent frames of images.

If the moving speeds of the moving objects are too low, too many images of the moving objects are in the synthesized trajectory photograph, such that the images of the moving objects can be covered, and the quality of the trajectory photograph can be affected. The images of the moving objects are regions corresponding to the moving objects in the n frames of images. As an alternative step, the electronic device may detect the moving speeds of the moving objects. Step 803 can include the following sub-steps:
1. the electronic device identifies the moving objects in the n frames of images;
   the electronic device firstly detects the moving objects in the n frames of images with a foreground detection technology and/or moving target detection technology;
2. for any one of the moving objects, the electronic device obtains a coordinate of one pixel in the image of the moving object in one frame of image;
   for example, as shown in Fig. 3, the coordinate of pixel 33 in the image 32 of the moving object in the frame 31 of image is obtained;
3. the electronic device obtains a coordinate of a corresponding pixel in the image of the moving object in an adjacent frame of image corresponding to the one frame of image;
   for example, as shown in Fig. 3, the coordinate of corresponding pixel 36 in the image 35 of the moving object in the adjacent frame 34 of image corresponding to the one frame 31 of image;
4. the electronic device calculates the moving speed of the moving object according to a difference of the two above coordinates;
   the electronic device calculates the difference of the coordinate of pixel 35 and the coordinate of pixel 36, and calculates the moving speed of the moving object according to the difference and a time difference between the adjacent frame of image and the one frame of image;
   the electronic device compares the calculated moving speed of the moving object and a preset speed, and if the moving speed of the moving object is greater than the preset speed, the moving object is a moving object with moving speed reaching the preset speed in the first background regions.

In step 804, a target background region is obtained according to the first background regions with an overlapping portion.

Since the n frames of images may be shot in a non-stationary state or in a relative stationary state (for example, in a running car), the first background regions corresponding to the n frames of images may be not exactly the same. If the first background regions corresponding to the n frames of images are not exactly the same and there may be the overlapping portion, the electronic device mosaics the first background regions to obtain the target background region according to the overlapping portion.

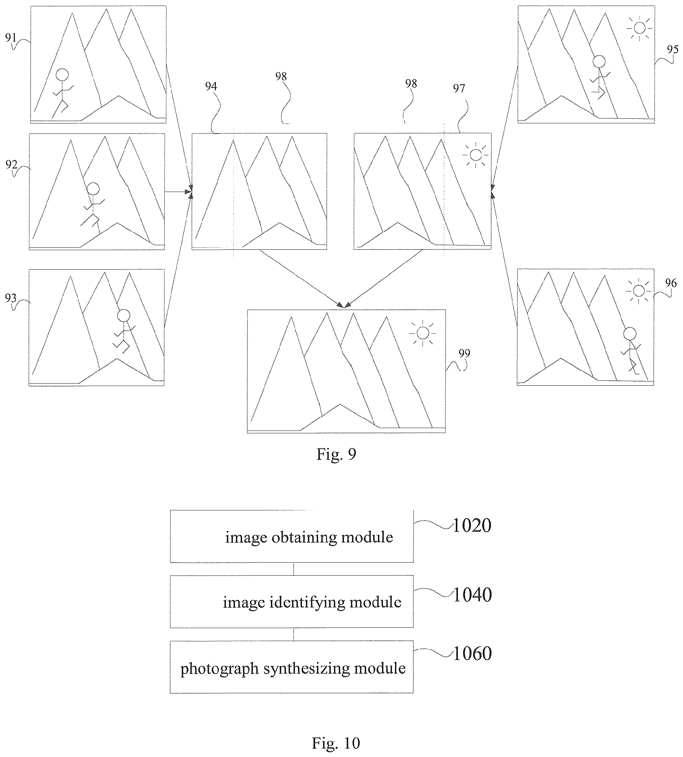

As shown in Fig. 9, representing background that is useful for understanding the invention, image 91, image 92 and image 93 correspond to a same first background region 94, image 95 and image 96 correspond to a same first background region 97, but the first background region 94 and the first background region97 are not exactly same, in which there are the overlapping portion 98 in the first background region 94 and the first background region 97, the electronic device mosaics the first background region 97 and the first background region 98 according to the overlapping portion 94 to obtain the target background region 99.

In step 805, for the same moving object, at least two non-overlapping images of the same moving object are extracted from the n frames of images, or at least two images of the same moving object with an overlapping portion not exceeding a preset threshold are extracted from the n frames of images.

As a possible implementation of this step, the images of the same moving object may overlap in the n frames of images, thus affecting the quality of the synthesized trajectory photograph. Therefore, the electronic device needs to extract the non-overlapping images from the n frames of images, and step 805 can include the following steps:
1. the electronic device obtains two coordinate sets corresponding to images of the same moving object in two frames of images respectively;
   as shown in Fig. 5, the electronic device obtains the coordinate set A of the image 52 of the same moving object in one frame 51 of image, and obtains the coordinate set B of the image 54 of the same moving object in one frame 53 of image;
2. the electronic device detects whether there are the same coordinates in the two coordinate sets; if yes, it is determined the two images of the same moving object are overlapping, one of the two images of the same moving object is abandoned; if no, the two images of the same moving object are both adopted;
   as shown in Fig. 5, the electronic device detects whether there are the same coordinates in the coordinate set A and the coordinate set B, for example, if there are no same coordinate in the coordinate set A and the coordinate set B, it is determined the image 54 of the same moving object and image 52 of the same moving object are non-overlapping.

As another possible implementation of this step, if an overlapping portion is small, the quality of the synthesized trajectory photograph is not affected, either. So, the electronic device can extract at least two images of the same moving object with an overlapping portion not exceeding a preset threshold from the n frames of images, in which sub-steps are as follows:
1. the electronic device obtains two coordinate sets corresponding to images of the same moving object in the two frames of images respectively;
   as shown in Fig. 6, the electronic device obtains the coordinate set A of the image 62 of the same moving object in one frame 61 of image, and obtains the coordinate set B of the image 64 of the same moving object in one frame 63 of image;
2. the electronic device calculates a ratio of same coordinates in the two coordinate sets;
   the number of the same coordinates in the two coordinate sets is obtained, and then the ratio of the same coordinates in the two coordinate sets is calculated.;
3. if the ratio is less than or equal to a preset threshold, the electronic device extracts the images of the same moving object in the two frames of images;
   as shown in Fig. 6, the preset threshold is 10%, the ratio of the same coordinates in the coordinate set A of the image 62 of the same moving object and the coordinate set B of the image 64 of the same moving object is 5%, then electronic device extracts the image 62 of the same moving object and the image 64 of the same moving object. Of course, if the ratio is greater than the preset threshold, the electronic device extracts one of the two images of the same moving object and abandons another.

In step 806, the target photograph is synthesized according to the target background region and the at least two non-overlapping images of the same moving object or the at least two images of the same moving object with the overlapping portion not exceeding the preset threshold.

The electronic device synthesizes the target photograph (i.e. the trajectory photograph) according to the target background region mosaicked in step 804 and the at least two non-overlapping images of the same moving object or the at least two images of the same moving object with the overlapping portion not exceeding the preset threshold extracted by the electronic device in step 805.

Here the same moving object can be the moving object with the moving speed exceeding the preset threshold selected by the electronic device in step 803. In the process of synthesizing, the electronic device firstly takes the target background region as the background region of the target photograph. Then for different images of the same moving object, according to original relative positions of each image of the same moving object relative to the target background region in the n frames of images, the electronic device copies each image of the same moving object to a corresponding position in the target background region so as to obtain the target photograph.

As shown in Fig. 7, the electronic device mosaics the first background regions with an overlapping portion to obtain the target background region 71, and extracts five images 72 of the same moving object, and synthesizes the target photograph 73 according to the target background region 71 and the five images 72 of the same moving object.

In summary, with the method for obtaining a photograph according to an exemplary embodiment of the present disclosure, by obtaining the n frames of images, in which n≥2; identifying the first background regions and the moving objects in the n frames of images; and synthesizing the target photograph according to the first background regions and the moving objects, in which the target photograph includes the at least two images in different motion states of the same moving object locating in the same first background region, the problems in the related art that the ordinary user cannot get the high-quality trajectory photograph due to the fact that the operation is complicated and specialized, can be solved, and the effect that the high-quality trajectory photograph can be got by the user without the complex operation can be realized.

With the method for obtaining a photograph according to an exemplary embodiment of the present disclosure, by mosaicing the first background regions with an overlapping portion to obtain the target background region, and synthesizing the target photograph according to the target background region and the at least two non-overlapping images of the same moving object or the at least two images of the same moving object with the overlapping portion not exceeding the preset threshold, the effect of generating a panorama of the trajectory can be achieved.

The embodiments providing an apparatus of the present disclosure are as follows. The apparatus is used to implement the method according to the embodiments of the present disclosure. Concerning the details which are not described in the embodiments of the device, reference is made to the embodiments of the method.

Fig. 10 is the block diagram of an apparatus for obtaining a photograph according to an exemplary embodiment of the present disclosure representing background that is useful for understanding the invention. The apparatus of this embodiment can be all or a part of an electronic device with the image processing capability by software, hardware or combinations thereof. The apparatus can include
an image obtaining module 1020, configured to obtain n frames of images, in which n≥2;
an image identifying module 1040, configured to identify first background regions and moving objects in the n frames of images;
a photograph synthesizing module 1060, configured to synthesize a target photograph according to the first background regions and the moving objects, in which the target photograph comprises at least two images in different motion states of a same moving object locating in a same first background region.

In summary, with the apparatus for obtaining a photograph according to an exemplary embodiment of the present disclosure, by obtaining the n frames of images, in which n ≥2; identifying the first background regions and the moving objects in the n frames of images; and synthesizing the target photograph according to the first background regions and the moving objects, in which the target photograph includes the at least two images in different motion states of the same moving object locating in the same first background region, the problems in the related art that the ordinary user cannot get the high-quality trajectory photograph due to the fact that the operation is complicated and specialized, can be solved, and the effect that the high-quality trajectory photograph can be got by the user without the complex operation can be realized.

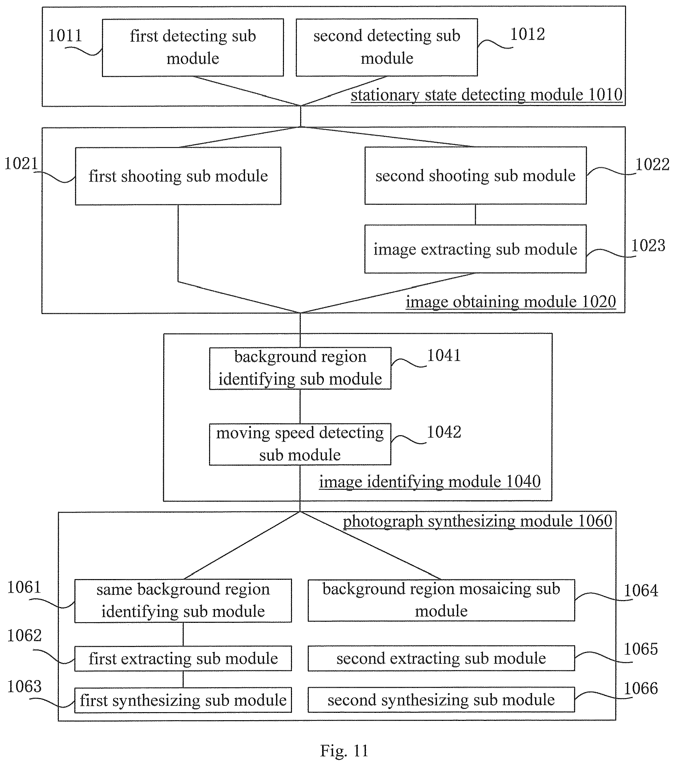

Fig. 11 is the block diagram of an apparatus for obtaining a photograph according to another exemplary embodiment of the present disclosure. The apparatus of this embodiment can be all or a part of an electronic device with the image processing capability by software, hardware or combinations thereof. The apparatus can include:
an image obtaining module 1020, configured to obtain n frames of images, in which n≥2;
an image identifying module 1040, configured to identify first background regions and moving objects in the n frames of images;
a photograph synthesizing module 1060, configured to synthesize a target photograph according to the first background regions and the moving objects, in which the target photograph comprises at least two images in different motion states of a same moving object locating in a same first background region.

Alternatively, the image obtaining module 1020 includes:
a first shooting sub module 1021, configured to shoot in a fast continuous shooting mode to obtain the n frames of images, in which the fast continuous shooting mode is a mode for shooting at every predetermined interval.

Alternatively, the image obtaining module 1020 includes:
a second shooting sub module 1022, configured to shoot a video;
an image extracting sub module 1023, configured to extract the n frames of images from the video.

Alternatively, the apparatus further includes:
a stationary state detecting module 1010, configured to detect whether an electronic device is currently in a stationary state;
in which the image obtaining module 1020 is further configured to execute the step of obtaining n frames of images if the electronic device is currently in the stationary state.

Alternatively, the stationary state detecting module 1010 includes:
a first detecting sub module 1011, configured to obtain sensor data from a sensor disposed on the electronic device, in which the sensor comprises one or more of a gravity acceleration sensor, a gyroscope and an electronic compass sensor; and detect whether the sensor data change, in which it is determined that the electronic device is currently in the stationary state if the sensor data do not change;
   and/or
a second detecting sub module 1012, configured to detect whether a second background region obtained by an image sensor of the electronic device changes, in which it is determined that the electronic device is currently in the stationary state if the second background region does not change.

Alternatively, the image identifying module 1040 includes:
a background region identifying sub module 1041, configured to identify the first background regions in the n frames of images;
a moving speed detecting sub module 1042, configured to detect moving objects with moving speeds reaching a preset speed in the first background regions according to adjacent images.

Alternatively, the photograph synthesizing module 1060 includes:
a same background region identifying sub module 1061, configured to identify the same first background region from the n frames of images;
a first extracting sub module 1062, configured to extract at least two non-overlapping images of the same moving object from the n frames of images, or extract at least two images of the same moving object with an overlapping portion not exceeding a preset threshold from the n frames of images;
a first synthesizing sub module 1063, configured to synthesize the target photograph according to the same first background region and the at least two non-overlapping images of the same moving object or the at least two images of the same moving object with the overlapping portion not exceeding the preset threshold.

Alternatively, the photograph synthesizing module 1060 includes:
a background region mosaicing sub module 1064, configured to obtain a target background region by mosaicing first background regions with an overlapping portion;
a second extracting sub module 1065, configured to extract at least two non-overlapping images of the same moving object from the n frames of images, or extract at least two images of the same moving object with an overlapping portion not exceeding a preset threshold from the n frames of images;
a second synthesizing sub module 1066, configured to synthesize the target photograph according to the target background region and the at least two non-overlapping images of the same moving object or the at least two images of the same moving object with the overlapping portion not exceeding the preset threshold.

In summary, with the apparatus for obtaining a photograph according to an exemplary embodiment of the present disclosure, by obtaining the n frames of images, in which n ≥2; identifying the first background regions and the moving objects in the n frames of images; and synthesizing the target photograph according to the first background regions and the moving objects, in which the target photograph includes the at least two images in different motion states of the same moving object locating in the same first background region, the problems in the related art that the ordinary user cannot get the high-quality trajectory photograph due to the fact that the operation is complicated and specialized can be solved, and the effect that the high-quality trajectory photograph can be got by the user without the complex operation can be realized.

With the apparatus for obtaining a photograph according to an exemplary embodiment of the present disclosure, by detecting whether the electronic device is currently in the stationary state, the n frames of images can be obtained if the electronic device is currently in the stationary state, thus ensuring the high-quality of the synthesized trajectory photograph.

With the apparatus for obtaining a photograph according to an exemplary embodiment of the present disclosure, by extracting at least two non-overlapping images of the same moving object from the n frames of images, or extracting at least two images of the same moving object with an overlapping portion not exceeding a preset threshold from the n frames of images, the problem that images in the synthesized trajectory photograph overlap seriously can be solved, thus ensuring the high-quality of the synthesized trajectory photograph.

With respect to the devices in the above embodiments, the specific manners for performing operations for individual modules therein have been described in detail in the embodiments regarding the methods for obtaining a photograph, which are not elaborated herein again.

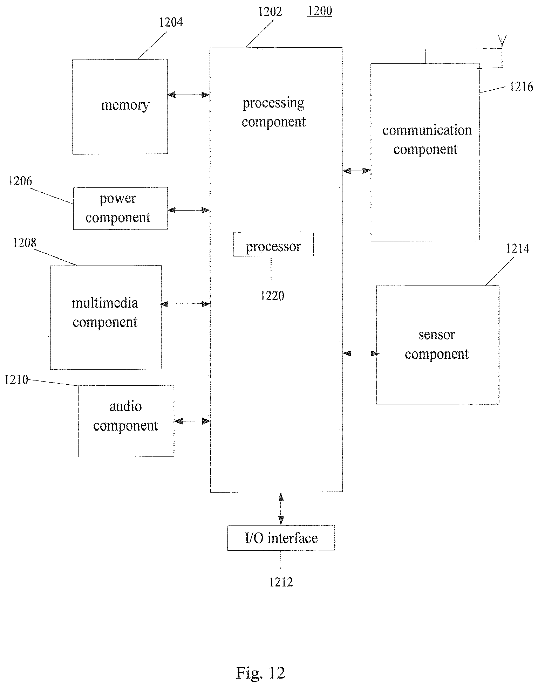

Fig. 12 is the block diagram of an apparatus 1200 for obtaining a photograph according to an embodiment of the present disclosure. For example, the apparatus 1200 may be an electronic device with an image processing capability.

Referring to Fig. 12, the apparatus 1200 may include one or more of the following components: a processing component 1202, a memory 1204, a power component 1206, a multimedia component 1208, an audio component 1210, an input/output (I/O) interface 1212, a sensor component 1214 and a communication component 1216.

The processing component 1202 typically controls overall operations of the apparatus 1200, such as the operations associated with display, telephone calls, data communications, camera operations, and recording operations. The processing component 1202 may include one or more processors 1220 to execute instructions so as to perform all or a part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the apparatus 1200. Examples of such data include instructions for any applications or methods operated on the apparatus 1200, contact data, phonebook data, messages, pictures, videos, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 is configured to provide power to various components of the apparatus 1200. The power component 1206 may include a power management system, one or more power sources, and other components associated with the generation, control, and distribution of power in the apparatus 1200.

The multimedia component 1208 includes a screen configured to provide an output interface between the apparatus 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and the rear camera may receive an external multimedia datum when the apparatus 1200 is in an operation mode such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the apparatus 1200 is in an operation mode, such as a call mode, a recording mode, and a voice recognition mode. The received audio signal may be further stored in the memory 1204 or transmitted via the communication component 1216. In some embodiments, the audio component 1210 further includes a loud speaker to output audio signals.

The I/O interface 1212 is configured to provide an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the apparatus 1200. For instance, the sensor component 1214 may detect an on/off status of the apparatus 1200, relative positioning of components (e.g., a display screen and a keypad) of the apparatus 1200. The sensor component 1214 may further detect a change in position of the apparatus 1200 or a component of the apparatus 1200, a presence or absence of user contact with the apparatus 1200, an orientation or an acceleration/deceleration of the apparatus 1200, and a change in temperature of the apparatus 1200. The sensor component 1214 may include a proximity sensor configured to detect the presence of nearby objects without any physical contact. The sensor component 1214 may further include a light sensor, such as a CMOS or CCD image sensor, for use in imaging applications. In some embodiments, the sensor component 1214 may also include an accelerometer sensor, a gyroscope sensor, a magnetic sensor, a pressure sensor, or a temperature sensor.

The communication component 1216 is configured to facilitate a wired or wireless communication between the apparatus 1200 and other terminals. The apparatus 1200 can access a wireless network based on a communication standard, such as WiFi, 2G, or 3G, or a combination thereof. In one exemplary embodiment, the communication component 1216 receives a broadcast signal or broadcast associated information from an external broadcast control system via a broadcast channel. In one exemplary embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, or other technologies.

In exemplary embodiments, the apparatus 1200 may be implemented with one or more electronic elements such as application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is further provided a non-transitory computer readable storage medium including instructions, such as the memory 1204 including instructions executable by the processor 1220 in the apparatus 1200 to perform the above-described methods. For example, the non-transitory computer-readable storage medium may be a ROM, a RAM, a CD-ROM, a magnetic tape, a floppy disc, an optical data storage device, and the like.

Embodiments of the present disclosure further provide a non-transitory computer readable storage medium. The non-transitory computer readable storage medium according to embodiments of the present disclosure may include instructions that, when executed by a processor of an apparatus, causes the apparatus to execute a method for obtaining a photograph. The method includes:
obtaining n frames of images, in which n≥2;
identifying first background regions and moving objects in the n frames of images;
synthesizing a target photograph according to the first background regions and the moving objects, in which the target photograph comprises at least two images in different motion states of a same moving object locating in a same first background region.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method carried out by an electronic device for obtaining a photograph, comprising:
the electronic device comprising an image obtaining module obtaining n frames of images, wherein n≥2 (202);
the electronic device identifying first background regions and moving objects in the n frames of images (204); and
the electronic device synthesizing a target photograph according to the first background regions and the moving objects, wherein the target photograph comprises at least two images in different motion states of a same moving object locating in a same first background region (206),
the method **characterized by**
the electronic device comprising a stationary state detection module detecting whether the electronic device is currently in a stationary state,
wherein the step of the electronic device obtaining n frames of images is only executed if the electronic device is currently in the stationary state.

2. The method according to claim 1, wherein detecting whether the electronic device is currently in the stationary state comprises:
the electronic device obtaining sensor data from a sensor disposed on the electronic device, wherein the sensor comprises one or more of a gravity acceleration sensor, a gyroscope and an electronic compass sensor; and
the electronic device detecting whether the sensor data change, wherein it is determined that the electronic device is currently in the stationary state if the sensor data do not change.

3. An apparatus for obtaining a photograph, comprising:
an image obtaining module (1020), configured to obtain n frames of images, wherein n≥2;
an image identifying module (1040), configured to identify first background regions and moving objects in the n frames of images;
a photograph synthesizing module (1060), configured to synthesize a target photograph according to the first background regions and the moving objects, wherein the target photograph comprises at least two images in different motion states of a same moving object locating in a same first background region;
the apparatus **characterized by** comprising:
a stationary state detecting module (1010), configured to detect whether an electronic device is currently in a stationary state;
wherein the image obtaining module is further configured to only execute the step of obtaining n frames of images if the electronic device is currently in the stationary state.

4. The apparatus according to claim 3, wherein the stationary state detecting module (1010) comprises:
a first detecting sub module (1011), configured to obtain sensor data from a sensor disposed on the electronic device, wherein the sensor comprises one or more of a gravity acceleration sensor, a gyroscope and an electronic compass sensor; and detect whether the sensor data change, wherein it is determined that the electronic device is currently in the stationary state if the sensor data do not change.

5. A non-transitory computer-readable storage medium having stored therein instructions that, when executed by a processor of an electronic device, causes the electronic device to perform a method according to claim 1 or claim 2.

## Patentansprüche

1. Verfahren, das von einer elektronischen Vorrichtung zum Erhalten einer Fotografie durchgeführt wird, umfassend:
Erhalten von n Vollbildern durch eine ein Bilderhaltungsmodul umfassende elektronische Vorrichtung, wobei n≥2 (202);
Identifizieren erster Hintergrundregionen und bewegter Objekte in den n Vollbildern (204) durch die elektronische Vorrichtung und
Synthetisieren einer Zielfotografie gemäß den ersten Hintergrundregionen und den bewegten Objekten durch die elektronische Vorrichtung, wobei die Zielfotografie wenigstens zwei Bilder in verschiedenen Bewegungszuständen von einem gleichen bewegten Objekt, das in einer gleichen ersten Hintergrundregion (206) liegt, umfasst,
wobei das Verfahren **dadurch gekennzeichnet ist, dass**
die elektronische Vorrichtung ein einen stationären Zustand erkennendes Modul umfasst, das erkennt, ob die elektronische Vorrichtung aktuell in einem stationären Zustand ist,
wobei der Schritt des Erhaltens von n Vollbildern durch die elektronische Vorrichtung nur ausgeführt wird, wenn die elektronische Vorrichtung aktuell im stationären Zustand ist.

2. Verfahren nach Anspruch 1, wobei das Erkennen, ob die elektronische Vorrichtung aktuell im stationären Zustand ist, Folgendes umfasst:
Erhalten von Sensordaten durch die elektronische Vorrichtung von einem Sensor, der an der elektronischen Vorrichtung angeordnet ist, wobei der Sensor einen oder mehr von einem Fallbeschleunigungssensor, einem Gyroskop und einem elektronischen Kompasssensor umfasst; und
Erkennen durch die elektronische Vorrichtung, ob sich die Sensordaten ändern, wobei bestimmt wird, dass die elektronische Vorrichtung aktuell in dem stationären Zustand ist, wenn sich die Sensordaten nicht ändern.

3. Vorrichtung zum Erhalten einer Fotografie, die Folgendes umfasst:
ein Bilderhaltungsmodul (1020), das zum Erhalten von n Vollbildern konfiguriert ist, wobei n≥2;
ein Bildidentifizierungsmodul (1040), das zum Identifizieren erster Hintergrundregionen und bewegter Objekte in den n Vollbildern konfiguriert ist;
ein Fotografiesynthetisierungsmodul (1060), das zum Synthetisieren einer Zielfotografie gemäß den ersten Hintergrundregionen und den bewegten Objekten konfiguriert ist, wobei die Zielfotografie wenigstens zwei Bilder in verschiedenen Bewegungszuständen eines gleichen bewegten Objekts umfasst, das in einer gleichen ersten Hintergrundregion liegt;
wobei die Vorrichtung **dadurch gekennzeichnet ist, dass** sie Folgendes umfasst:
ein einen stationären Zustand erkennendes Modul (1010), das zum Erkennen, ob eine elektronische Vorrichtung aktuell in einem stationären Zustand ist, konfiguriert ist;
wobei das Bilderhaltungsmodul ferner konfiguriert ist, um den Schritt des Erhaltens von n Vollbildern nur dann auszuführen, wenn die elektronische Vorrichtung aktuell im stationären Zustand ist.

4. Vorrichtung nach Anspruch 3, wobei das einen stationären Zustand erkennende Modul (1010) Folgendes umfasst:
ein erstes Erkennungsuntermodul (1011), das konfiguriert ist zum Erhalten von Sensordaten von einem Sensor, der an der elektronischen Vorrichtung angeordnet ist, wobei der Sensor einen oder mehr von einem Fallbeschleunigungssensor, einem Gyroskop und einem elektronischen Kompasssensor umfasst, und zum Erkennen, ob die Sensordaten sich ändern, wobei bestimmt wird, dass die elektronische Vorrichtung aktuell im stationären Zustand ist, wenn die Sensordaten sich nicht ändern.

5. Nichtflüchtiges computerlesbares Speichermedium mit darin gespeicherten Anweisungen, die bei Ausführung durch einen Prozessor einer elektronischen Vorrichtung die elektronische Vorrichtung zum Durchführen eines Verfahrens nach Anspruch 1 oder Anspruch 2 veranlassen.

## Revendications

1. Procédé exécuté par un dispositif électronique pour obtenir une photographie, comprenant :
l'obtention par un module d'obtention d'images du dispositif électronique de n trames d'images, dans lequel n≥2 (202) ;
l'identification par le dispositif électronique de premières régions d'arrière-plan et d'objets animés dans les n trames d'images (204) ; et
la synthétisation par le dispositif électronique d'une photographie cible en fonction des premières régions d'arrière-plan et des objets animés, dans lequel la photographie cible comprend au moins deux images dans différents états d'animation d'un même objet animé situé dans une même première région d'arrière-plan (206),
le procédé étant **caractérisé en ce que**
le dispositif électronique comprend un module de détection d'état fixe qui détecte que le dispositif électronique est présentement dans un état fixe ou non,
dans lequel l'étape d'obtention par le dispositif électronique de n trames d'images est exécutée uniquement si le dispositif électronique est présentement dans l'état fixe.

2. Procédé selon la revendication 1, dans lequel la détection que le dispositif électronique est présentement dans un état fixe ou non comprend :
l'obtention par le dispositif électronique de données de capteur à partir d'un capteur disposé sur le dispositif électronique, dans lequel le capteur comprend un ou plusieurs d'un capteur d'accélération par gravité, d'un gyroscope et d'un capteur de boussole électronique ; et
la détection par le dispositif électronique que les données de capteur changent ou non, dans lequel il est déterminé que le dispositif électronique est présentement dans l'état fixe si les données de capteur ne changent pas.

3. Appareil d'obtention d'une photographie, comprenant :
un module d'obtention d'images (1020), configuré pour obtenir n trames d'images, dans lequel n≥2 ;
un module d'identification d'image (1040), configuré pour identifier des premières régions d'arrière-plan et des objets animés dans les n trames d'images ;
un module de synthétisation de photographie (1060), configuré pour synthétiser une photographie cible en fonction des premières régions d'arrière-plan et des objets animés, dans lequel la photographie cible comprend au moins deux images dans différents états d'animation d'un même objet animé situé dans une même première région d'arrière-plan ;
l'appareil étant **caractérisé en ce qu'**il comprend :
un module de détection d'état fixe (1010), configuré pour détecter qu'un dispositif électronique est présentement dans un état fixe ou non ;
dans lequel le module d'obtention d'image est configuré en outre pour exécuter uniquement l'étape d'obtention de n trames d'images si le dispositif électronique est présentement dans l'état fixe.

4. Appareil selon la revendication 3, dans lequel le module de détection d'état fixe (1010) comprend :
un premier sous-module de détection (1011), configuré pour obtenir des données de capteur à partir d'un capteur disposé sur le dispositif électronique, dans lequel le capteur comprend un ou plusieurs d'un capteur d'accélération par gravité, d'un gyroscope et d'un capteur de boussole électronique ; et détecter que les données de capteur changent ou non, dans lequel il est déterminé que le dispositif électronique est présentement dans l'état fixe si les données de capteur ne changent pas.

5. Support de mémorisation non transitoire lisible par ordinateur sur lequel sont mémorisées des instructions qui à leur exécution par un processeur d'un dispositif électronique amènent le dispositif électronique à exécuter un procédé selon la revendication 1 ou la revendication 2.
